# EUROPEAN PATENT APPLICATION

(11) **EP 2 168 705 A1**
(43) Date of publication of application: **31.03.2010**
(21) Application number: 08765355.6
(22) Date of filing: 09.06.2008
(51) Int. Cl.: B23K 9/02, B23K 9/00, B23K 35/30, E01D 19/12, B23K 103/04

(54) **WELDED JOINT, STEEL FLOOR PLATE AND PROCESS FOR MANUFACTURING STEEL FLOOR PLATE**

(30) Priority: 13.06.2007 JP 2007156454
(71) Applicant: IHI Corporation, Tokyo 135-8710 (JP)
(72) Inventor: INOSE, Kotaro, Tokyo 135-8710 (JP); MATSUOKA, Takaaki, Tokyo 135-8710 (JP); KAMBAYASHI, Junko, Tokyo 135-8710 (JP); SAITO, Shiro, Tokyo 135-8710 (JP)
(74) Representative: Modiano, Micaela Nadia
(86) International application number: PCT/JP2008/060565
(87) International publication number: WO 2008/153007

(57) **Abstract**

A welded joint improved in fatigue strength, a steel deck using the welded joint, and a process of producing the steel deck are provided.

A steel deck 3 includes a steel plate 10 having a paving surface 11 on which a pavement is placed, and stiffeners 20 welded to a lower surface 12 of the steel plate opposite the paving surface. Single bevel grooves 22 are formed at respective edges 21 of each stiffener brought into contact with the steel plate, and a weld metal 30 is deposited in each single bevel groove 22. The weld metal is a low transformation-temperature welding material whose martensitic transformation occurs in a predetermined low temperature range. The groove angle θ of the single bevel grooves 22 and welding conditions are set based on data acquired so as to obtain a fixed dilution ratio of the weld metal 30 through control of penetration rate.

## Description

### Technical Field

The present invention relates to a welded joint comprising a first welding member and a second welding member joined to a surface of the first welding member by welding. More particularly, the present invention relates to a welded joint suitable as a joint between a stiffener (rib) and a steel plate (deck plate) for supporting a pavement of a bridge, a steel deck using such a welded joint structure, and a process for producing the steel deck.

### Background Art

The steel deck includes a steel plate at its main part. Since the steel plate alone does not provide sufficient rigidity, however, a plurality of stiffeners are usually attached at regular intervals to the lower surface of the steel plate opposite the paving surface on which a pavement is placed.

In some steel decks, a plurality of plate steel members as the stiffeners, for example, are attached to the steel plate by arc welding (SAW, SMAW, GMAW, etc.), while in others, steel members having a V- or U-shaped cross section to form a closed-section structure in cooperation with the steel plate are attached as the stiffeners to the steel plate by arc welding.

As a joint between the steel plate and each stiffener of the steel deck, a welded joint is employed which is obtained by depositing a weld metal by arc welding in a single bevel groove formed at an edge of the stiffener brought into contact with the steel plate. Where the stiffener is a steel member with a V- or U-shaped cross section, single bevel grooves are formed at respective edges of the stiffener such that the single bevel grooves open outward in respective opposite directions, and the welded joint is formed at the individual edges of the stiffener brought into contact with the steel plate (see, e.g., Patent Document 1).
Patent Document 1: Japanese Laid-open Patent Publication No. 2001-248114

In the welded joint used in the steel deck, however, as the temperature of the weld metal lowers after the arc welding, the weld metal thermally shrinks, producing a tensile residual stress within the metal members. Such welding residual stress lowers the accuracy of joining between the steel plate and the stiffener, as well as the tensile strength, compressive strength and fatigue strength of these members.

In addition, where the stiffener is a steel member with a V- or U-shaped cross section, the welding operation can only be performed from outside of the stiffener. Thus, when the welding is performed while avoiding deterioration in the weld quality due to melt-through (burn-through), an unwelded region (non-penetrated region) inevitably remains at the bottom of each single bevel groove of the welded joint, namely, at the roots forming the closed-section structure.

If the welding residual stress remains in the welded joint of the steel deck for supporting a pavement of a bridge and also the welded joint includes a non-penetrated region, a crack is formed at the non-penetrated region and pierces through the steel plate or weld bead as the steel deck is repeatedly applied with bending load. As a result, a problem arises in that the fatigue strength of the steel deck suddenly lowers, possibly causing fatigue breakdown.

In conventional steel decks, moreover, in cases where a crack piercing through the steel plate or through the weld bead has been formed or is expected to be formed at the non-penetrated region, the pavement has to be removed from the bridge to repair or replace the steel deck, giving rise to the problem that the maintenance cost increases correspondingly. A solution to the problem has therefore been sought heretofore.

### Disclosure of the Invention

The present invention was created to solve the above problem, and an object thereof is to provide a welded joint which is applied, for example, to a steel deck for supporting a pavement of a bridge, is improved in fatigue strength to prevent fatigue breakdown and capable of reducing bridge maintenance costs, a steel deck using the welded joint, and a process for producing the steel deck.

A welded joint according to the present invention comprises a first welding member and a second welding member joined to a surface of the first welding member by welding, in which a single bevel groove is formed at an edge of the second welding member brought into contact with the first welding member, and a weld metal is deposited in the single bevel groove by arc welding to join the first and second welding members together. The welded joint is **characterized in that** the weld metal is a low transformation-temperature welding material whose martensitic transformation takes place in a predetermined low temperature range, and that a groove angle of the single bevel groove of the second welding member and welding conditions are set on the basis of data acquired so as to obtain a fixed dilution ratio of the weld metal through control of penetration rate.

Preferably, in the welded joint, the groove angle of the single bevel groove of the second welding member is set to about 45 degrees in accordance with the data acquired so as to obtain a fixed dilution ratio of the weld metal through control of the penetration rate.

Where the welded joint of the present invention is used, for example, in the steel deck of a bridge, the weld metal undergoes transformation expansion in the predetermined low temperature range so as to cancel out the thermal shrinkage, and substantially no welding residual stress remains in the steel plate as the first welding member and in the stiffener as the second welding member. As a result, even if a non-penetrated region exists, the frequency of occurrence of cracking significantly lessens, so that the lowering in the steel deck assembling accuracy as well as in the tensile strength and compressive strength of the steel deck can be avoided, making it possible to enhance the fatigue strength of the steel deck.

Also, in cases where a crack piercing through the steel plate or the weld bead has been formed or is expected to be formed, the steel deck can be repaired on the site of the bridge to recover or increase the fatigue strength. Since it is unnecessary to remove the pavement from the bridge for repair or replacement of the steel deck, the maintenance cost can be greatly cut down. Further, during the repair, the dilution ratio of the weld metal can be controlled to the fixed ratio, whereby the fatigue strength can be recovered or increased with good reproducibility.

In the welded joint of the present invention, the low transformation-temperature welding material is an iron alloy containing at least components: 0.20 mass % or less of carbon, 3.0 to 13.0 mass % of chromium, and 3.0 to 12.0 mass % of nickel; and the iron alloy has a composition adjusted such that an amount of linear expansion per millimeter in a temperature range from a martensitic transformation start temperature to room temperature is equal to or greater than -3 × 10⁻³ mm.

Where the welded joint of which the weld metal is an iron alloy having a proper composition is used in the steel deck of a bridge, for example, the weld metal undergoes appropriate transformation expansion in the predetermined low temperature range so as to cancel out the thermal shrinkage, and substantially no welding residual stress remains in the steel plate as the first welding member and in the stiffener as the second welding member, thus significantly lessening the frequency of occurrence of cracking at the non-penetrated region. It is therefore possible to avoid lowering in the steel deck assembling accuracy as well as in the tensile strength and compressive strength of the steel deck, whereby the fatigue strength of the steel deck can be further improved.

Preferably, in the welded joint of the present invention, the first welding member is a high fatigue-strength steel plate which has a high fatigue strength and of which a fatigue crack propagation speed in a predetermined stress intensity factor range falls within a predetermined low speed range.

Thus, a high fatigue-strength steel plate whose composition is adjusted so as to exhibit a low fatigue crack propagation speed is selected as the first welding member of the welded joint. Accordingly, even in the case where a crack is formed at the non-penetrated region of the first welding member, propagation of the crack can be restrained, making it possible to ensure sufficient fatigue strength.

A steel deck according to the present invention comprises a steel plate having a paving surface on which a pavement of a bridge is placed, and at least one stiffener joined by welding to a lower surface of the steel plate opposite the paving surface, wherein a single bevel groove is formed at an edge of the stiffener brought into contact with the steel plate, and a weld metal is deposited in the single bevel groove by arc welding to form the steel deck. The steel deck is **characterized in that** the weld metal is a low transformation-temperature welding material whose martensitic transformation takes place in a predetermined low temperature range, and that a groove angle of the single bevel groove of the stiffener and welding conditions are set on the basis of data acquired so as to obtain a fixed dilution ratio of the weld metal through control of penetration rate.

Preferably, in this steel deck, the groove angle of the single bevel groove of the stiffener is set to about 45 degrees in accordance with the data acquired so as to obtain a fixed dilution ratio of the weld metal through control of the penetration rate.

With the steel deck of the present invention, the weld metal undergoes transformation expansion in the predetermined low temperature range so as to cancel out the thermal shrinkage, and substantially no welding residual stress remains in the steel plate and the stiffener. As a result, even if a non-penetrated region exists, the crack occurrence frequency significantly lessens, so that the lowering in the steel deck assembling accuracy as well as in the tensile strength and compressive strength of the steel deck can be avoided, making it possible to enhance the fatigue strength of the steel deck.

Moreover, in cases where a crack piercing through the steel plate or the weld bead is expected to be formed, the steel deck can be repaired on the site of the bridge to recover or increase the fatigue strength. Since it is unnecessary to remove the pavement from the bridge for repair or replacement of the steel deck, the maintenance cost can be greatly cut down. Further, during the repair, the dilution ratio of the weld metal can be controlled to the fixed ratio, whereby the fatigue strength of the steel deck can be recovered or increased with good reproducibility.

Preferably, in the steel deck of the present invention, the stiffener forms a closed-section structure in cooperation with the lower surface of the steel plate, and single bevel grooves are formed at respective edges of the stiffener brought into contact with the steel plate to form the closed-section structure such that the single bevel grooves open outward in respective opposite directions. More specifically, the stiffener preferably comprises a shaped steel with a U-shaped cross section.

With this steel deck, even though the welding operation can only be performed from outside of the stiffener with a V- or U-shaped cross section and thus a non-penetrated region is liable to be formed at the bottom of each single bevel groove, the weld metal undergoes transformation expansion in the predetermined low temperature range so as to cancel out the thermal shrinkage, and substantially no welding residual stress remains in the steel plate as well as in the stiffener. Consequently, sufficient rigidity of the steel deck is secured and also the crack occurrence frequency significantly lessens, so that the fatigue strength of the steel deck can be enhanced. Further, shaped steels with a U-shaped cross section are easily available, making it possible not only to save the labor of obtaining stiffeners but to improve the fatigue strength of the steel deck while at the same time securing sufficient rigidity.

Preferably, in the steel deck of the present invention, the low transformation-temperature welding material is an iron alloy containing at least components: 0.20 mass % or less of carbon, 3.0 to 13.0 mass % of chromium, and 3.0 to 12.0 mass % of nickel; and the iron alloy has a composition adjusted such that an amount of linear expansion per millimeter in a temperature range from a martensitic transformation start temperature to room temperature is equal to or greater than -3 × 10⁻³ mm.

With the steel deck using, as the weld metal, the iron alloy having a proper composition, the weld metal undergoes appropriate transformation expansion in the predetermined low temperature range so as to cancel out the thermal shrinkage, and substantially no welding residual stress remains in the steel plate as well as in the stiffener, thus significantly lessening the frequency of occurrence of cracking at the non-penetrated region. It is therefore possible to avoid lowering in the steel deck assembling accuracy as well as in the tensile strength and compressive strength of the steel deck, whereby the fatigue strength of the steel deck can be further improved. Since the dilution ratio of the weld metal can be controlled to the fixed ratio, moreover, the fatigue strength of the steel deck can be recovered or increased with good reproducibility.

Preferably, in the steel deck of the present invention, the steel plate is a high fatigue-strength steel plate which has a high fatigue strength and of which a fatigue crack propagation speed in a predetermined stress intensity factor range falls within a predetermined low speed range.

Thus, in this steel deck, a high fatigue-strength steel plate whose composition is adjusted so as to exhibit a low fatigue crack propagation speed is selected as the steel plate. Accordingly, even in the case where a crack is formed at the non-penetrated region of the steel plate, propagation of the crack can be restrained, making it possible to ensure sufficient fatigue strength.

Also, according to the present invention, there is provided a process for producing the steel deck, which comprises: a first step of selecting, as the weld metal, a low transformation-temperature welding material whose martensitic transformation takes place in the predetermined low temperature range; a second step of forming a single bevel groove at the edge of the stiffener brought into contact with the steel plate; and a third step of performing welding under the welding conditions to deposit the weld metal in the single bevel groove.

Thus, in the steel deck production process of the present invention, a low transformation-temperature welding material whose martensitic transformation takes place in the predetermined low temperature range is selected as the weld metal in the first step, then, a single bevel groove is formed at the edge of the stiffener in the second step, and in the third step, welding is performed under the welding conditions to deposit the low transformation-temperature welding material, selected as the weld metal, in the single bevel groove. Accordingly, the weld metal undergoes transformation expansion in the predetermined low temperature range so as to cancel out the thermal shrinkage, and substantially no welding residual stress remains in the steel plate as well as in the stiffener, thus significantly lessening the frequency of occurrence of cracking at a non-penetrated region which is liable to be formed at the bottom of the single bevel groove. It is therefore possible to provide a steel deck with high fatigue strength. Further, since the dilution ratio of the weld metal can be controlled to the fixed ratio, the fatigue strength of the steel deck can be recovered or increased with good reproducibility.

According to another aspect of the present invention, there is provided a process for producing the steel deck, in which the stiffener forms a closed-section structure in cooperation with the lower surface of the steel plate and which comprises: a first step of selecting, as the weld metal, a low transformation-temperature welding material whose martensitic transformation takes place in the predetermined low temperature range; a second step of forming single bevel grooves at respective edges of the stiffener brought into contact with the steel plate to form the closed-section structure such that the single bevel grooves open outward in respective opposite directions; and a third step of performing welding under the welding conditions to deposit the weld metal in the individual single bevel grooves.

In this steel deck production process, a low transformation-temperature welding material whose martensitic transformation takes place in the predetermined low temperature range is selected as the weld metal in the first step, then in the second step, single bevel grooves are formed at the respective edges of the stiffener brought into contact with the steel plate to form the closed-section structure such that the single bevel grooves open outward in the respective opposite directions, and in the third step, welding is performed under the welding conditions to deposit the weld metal in the individual single bevel grooves. With this process, even though the welding operation can only be performed from outside of the stiffener with a V- or U-shaped cross section and thus a non-penetrated region is liable to be formed at the bottom of each single bevel groove, the weld metal undergoes transformation expansion in the predetermined low temperature range so as to cancel out the thermal shrinkage, and substantially no welding residual stress remains in the steel plate as well as in the stiffener. Consequently, sufficient rigidity of the steel deck is secured and also the crack occurrence frequency significantly decreases, so that the fatigue strength of the steel deck can be enhanced. Further, since the dilution ratio of the weld metal can be controlled to the fixed ratio, the fatigue strength of the steel deck can be recovered or increased with good reproducibility.

In the steel deck production processes of the present invention, preferably, in the first step, an iron alloy is selected as the low transformation-temperature welding material, the iron alloy containing at least components: 0.20 mass % or less of carbon, 3.0 to 13.0 mass % of chromium, and 3.0 to 12.0 mass % of nickel; and having a composition adjusted such that an amount of linear expansion per millimeter in a temperature range from a martensitic transformation start temperature to room temperature is equal to or greater than -3 × 10⁻³ mm.

With the steel deck production processes, the iron alloy having a proper composition is selected as the weld metal. Accordingly, the weld metal undergoes appropriate transformation expansion in the predetermined low temperature range so as to cancel out the thermal shrinkage, and substantially no welding residual stress remains in the steel plate as well as in the stiffener, thus significantly lessening the frequency of occurrence of cracking at the non-penetrated region. It is therefore possible to produce a steel deck with remarkably high fatigue strength.

Preferably, in the steel deck production processes of the present invention, the first step further includes selecting, as the steel plate, a high fatigue-strength steel plate which has a high fatigue strength and of which a fatigue crack propagation speed in a predetermined stress intensity factor range falls within a predetermined low speed range.

Thus, in the steel deck production processes, a high fatigue-strength steel plate whose composition is adjusted so as to exhibit a low fatigue crack propagation speed is selected as the steel plate. Accordingly, even in the case where a crack is formed at the non-penetrated region of the steel plate, propagation of the crack can be restrained.

It is therefore possible to produce a steel deck with sufficiently high fatigue strength.

In the steel deck production processes of the present invention, preferably, in the third step, the weld metal is deposited in each of the single bevel grooves by single pass welding.

Thus, with the steel deck production processes, the welding is carried out by single pass welding, and not multi-pass (multilayer) welding, and it is also unnecessary to take care not to cause melt-through. Accordingly, the man-hour of the welding work can be reduced and also the efficiency of the welding operation can be improved.

### Brief Description of the Drawings

FIG. 1 is a perspective view of a box girder for a bridge, in which are incorporated steel decks according to an embodiment of the present invention.
FIG. 2 is an enlarged front view of a part of the steel deck shown in FIG. 1.
FIG. 3 is an enlarged perspective view of a part of the steel deck shown in FIG. 1.
FIG. 4 is an enlarged view showing a single bevel groove of a welded joint according to an embodiment of the present invention, the welded joint being applied to the steel deck shown in FIG. 1.
FIG. 5 is a perspective view illustrating the manner of how a steel plate and a stiffener are joined together to form the steel deck shown in FIG. 1.
FIG. 6 illustrates fatigue crack propagation characteristics of a high fatigue-strength steel plate used as a steel plate of the steel deck shown in FIG. 1.
FIG. 7 is an S-N diagram showing a fatigue strength of the high fatigue-strength steel plate used as a steel plate of the steel deck shown in FIG. 1.
FIG. 8 illustrates the relationship between the temperature and elongation of a low transformation-temperature welding material used as a weld metal in the steel deck of FIG. 1, in comparison with an ordinary weld metal.
FIG. 9 is an S-N diagram showing the fatigue strength of the welded joint used in the steel deck of FIG. 1, along with the fatigue strengths of welded joints according to comparative examples.

### Best Mode of Carrying out the Invention

Embodiments of the present invention will be described below with reference to the accompanying drawings.

In the following description, a welded joint according to an embodiment of the present invention is applied to a steel deck of a box girder for a bridge, by way of example.

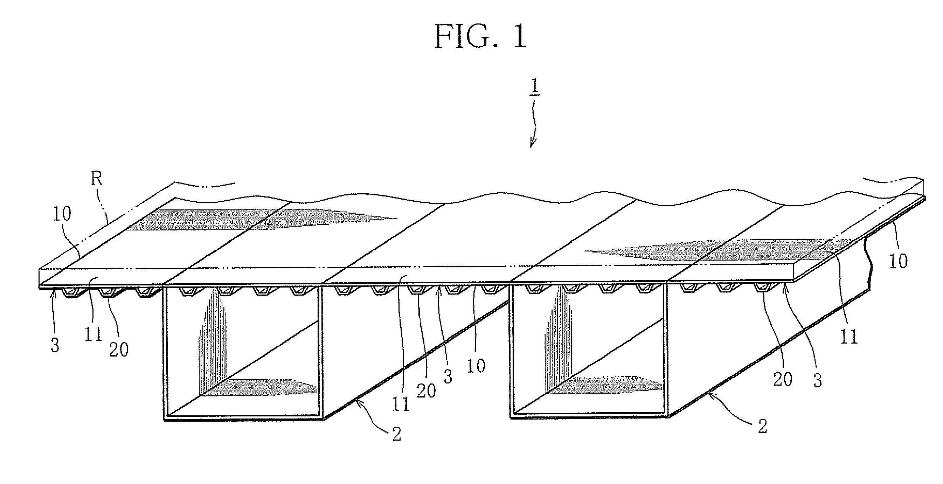

As shown in FIG. 1, a box girder 1 comprises, as its main parts, a plurality of main girders 2, a steel deck 3 as a center deck located between the main girders 2, 2, and steel decks 3 as side decks located outside of the main girders 1. The steel decks 3 and the main girders 2 are joined together by vertical joints, not shown, and the steel decks 3 extending in the longitudinal direction of the girders are joined to each other by a horizontal joint, not shown.

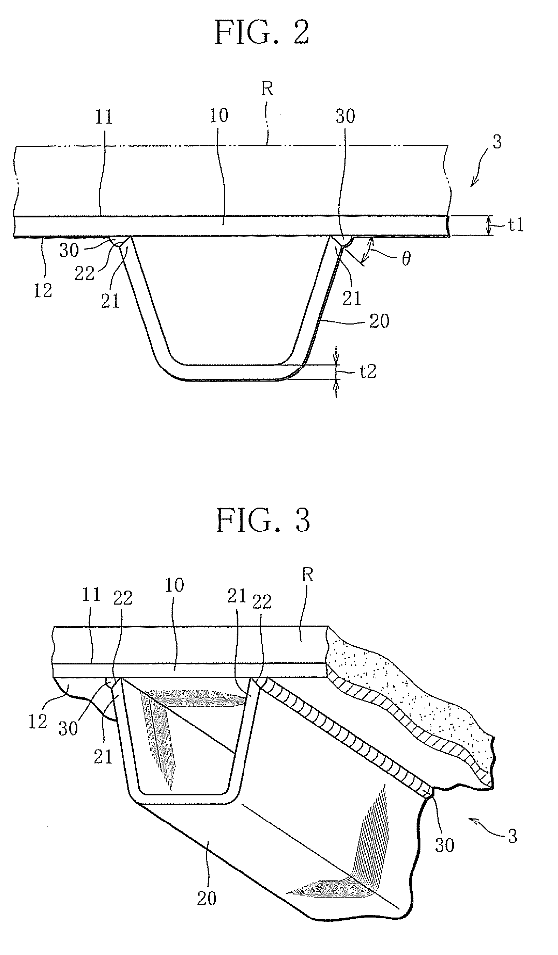

Each steel deck 3 of the box girder 1 includes, as shown in FIG. 2, a steel plate 10 having a paving surface 11 on which a bridge pavement R is laid, and a plurality of stiffeners 20 attached to a lower surface 12 of the steel plate 10 opposite the paving surface 11. Each stiffener 20 is a steel member having a generally U-shaped cross section so as to form a closed-section structure in cooperation with the steel plate 10. As illustrated in FIG. 3, the stiffener 20 is brought into contact with the steel plate 10 and joined to the steel plate 10 by depositing a weld metal 30 between the steel plate 10 and each of edges 21, 21 of the stiffener 20 by arc welding over the entire length of the stiffener 20.

Thus, the steel plate 10 and the stiffener 20 are welded together to constitute a welded joint by depositing a weld metal by arc welding in a single bevel groove 22 formed at each edge 21 of the stiffener 20. The single bevel grooves 22, 22 formed at the respective edges 21, 21 of the stiffener 20 open outward in respective opposite directions.

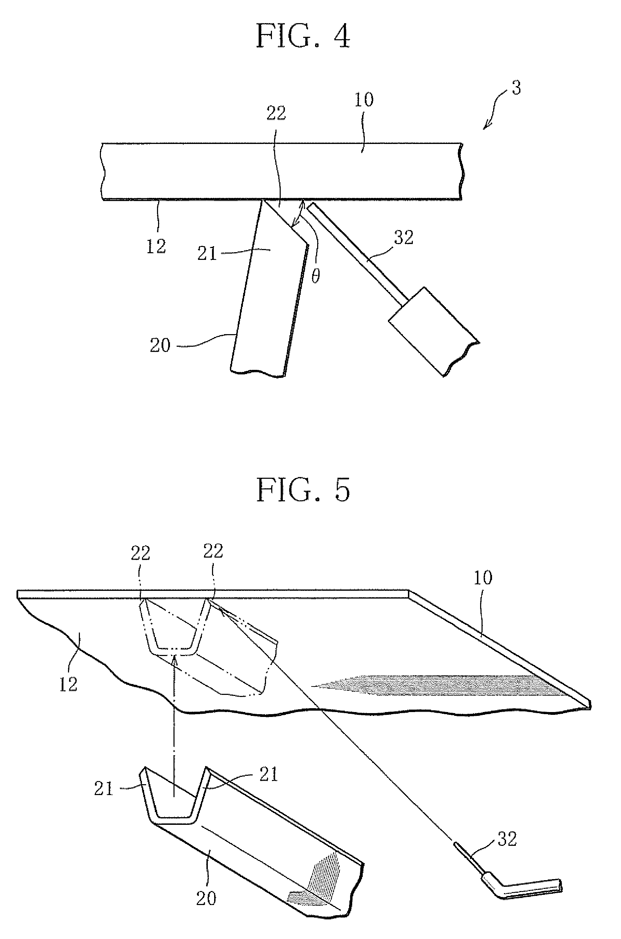

As the weld metal, a low transformation-temperature welding material whose martensitic transformation takes place in a predetermined low temperature range is used, and as shown in the enlarged view of FIG. 4, the groove angle θ of each single bevel groove 22 of the stiffener 20 is set to 40 to 50 degrees, preferably, to 45 degrees. The groove angle θ of the single bevel grooves 22 is determined on the basis of data acquired so as to obtain a fixed dilution ratio of the weld metal through control of the penetration rate.

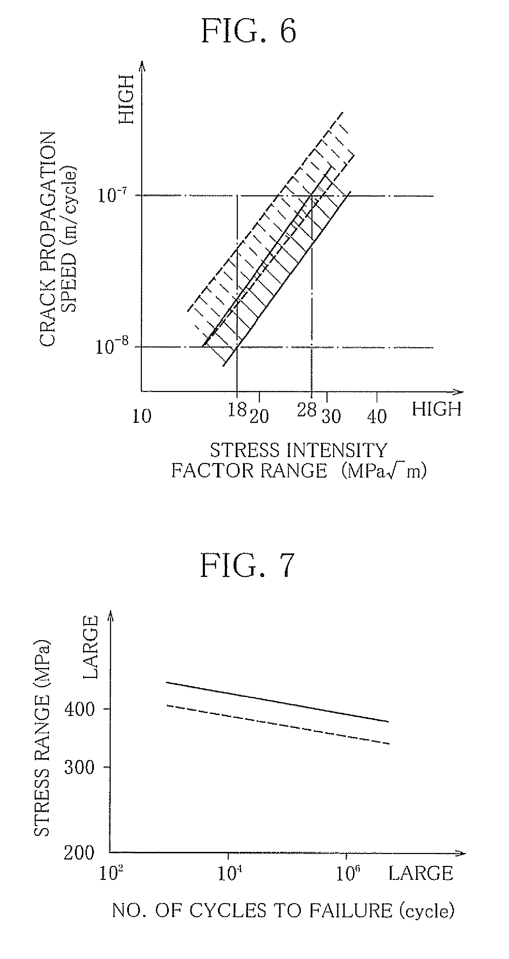

In this embodiment, a high fatigue-strength steel plate with a predetermined thickness t1 (e.g., 12 mm) is used as the steel plate 10. The high fatigue-strength steel plate has its metal structure adjusted such that, as shown in the graph of FIG. 6 depicting fatigue crack propagation characteristics, the fatigue crack propagation speed (indicated by the solid diagonal lines) in at least a predetermined stress intensity factor range (e.g., 18 to 28 MPa√m) falls within a predetermined low speed range (e.g., 10⁻⁸ to 10⁻⁷ m/cycle). Thus, the fatigue crack propagation speed of the high fatigue-strength steel plate is slower than that of an ordinary steel (indicated by the broken diagonal lines).

In addition, as seen from the S-N diagram of FIG. 7 depicting fatigue strength, the high fatigue-strength steel plate is made of a steel (e.g., KA36 or KD36 from JFE Steel Corporation) adjusted such that its fatigue strength (indicated by the solid line) is higher than that of an ordinary steel (indicated by the broken line).

On the other hand, the stiffener 20 with a U-shaped cross section is made of a shaped steel obtained by cutting and bending a flat steel plate with a predetermined thickness t2 (e.g., 6 to 8 mm) such that the shaped steel has a suitable width with respect to the width of the steel plate 10. The aforementioned high fatigue-strength steel plate may be used for the stiffener 20.

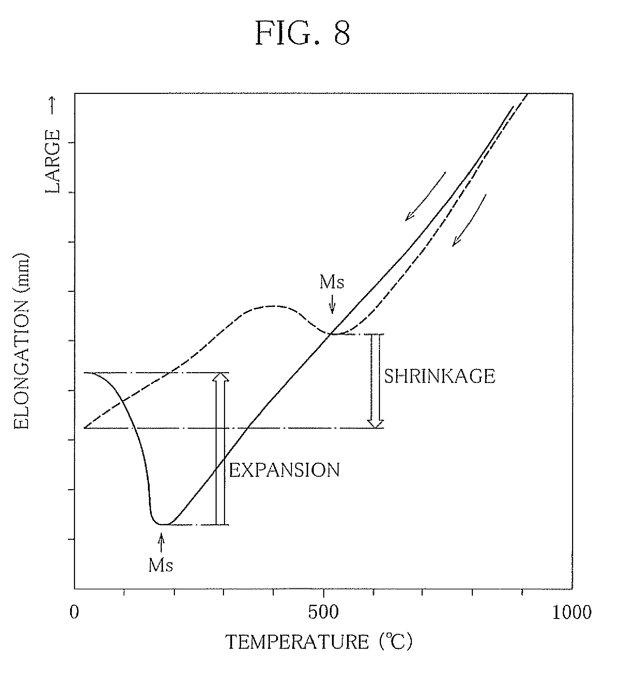

Also, the low transformation-temperature welding material used as the weld metal for arc welding is an iron alloy of which the component composition, heat treating conditions and the like are adjusted such that the martensitic transformation start temperature Ms at which the martensitic transformation starts for transformation expansion, indicated by the solid line in the graph of FIG. 8 illustrating the relationship between temperature and elongation, falls within a predetermined low temperature range (e.g., lower than or equal to 360°C and higher than or equal to 50°C) lower than the martensitic transformation start temperature of an ordinary weld metal, indicated by the broken line in the graph.

Specifically, the low transformation-temperature welding material is an iron alloy containing at least the following components: 0.20 mass % or less of C (carbon), 3.0 to 13.0 mass % of Cr (chromium) and 3.0 to 12.0 mass % of Ni (nickel), and the composition thereof is adjusted so that the amount of linear expansion per millimeter in the temperature range from the martensitic transformation start temperature to 30°C (room temperature) may be equal to or greater than -3 × 10⁻³ mm. To prevent weld cracking, the C (carbon) content is preferably lower than or equal to 0.12 mass %, and it is also preferable that the iron alloy contain traces of Si (silicon), Mn (manganese), Mo (molybdenum), Nb (niobium), etc.

Te process of producing the steel deck 3 will now be described.

First, the aforementioned high fatigue-strength steel plate with the predetermined thickness t1 is selected as the steel plate 10, then an ordinary shaped steel having the predetermined thickness t2 and having a U-shaped cross section is selected as the stiffener 20, and the above low transformation-temperature welding material is selected as the weld metal for arc welding. At this time, the high fatigue-strength steel plate may be used as the stiffener 20 (first step).

Subsequently, the single bevel grooves 22, 22 are formed at the respective edges 21, 21 of the of stiffener 20, which are brought into contact with the steel plate 10 to form a closed-section structure, in such a manner that the single bevel grooves open outward of the closed-section structure, namely, in respective opposite directions (second step).

Specifically, in accordance with the data acquired so as to obtain a fixed dilution ratio of the weld metal through control of the penetration rate, the groove angle θ of each single bevel groove 22 of the stiffener 20 is set to 45 degrees, as shown in FIG. 4. These single bevel grooves 22, 22 facilitate the arc welding performed from outside of the stiffener 20 which is brought into contact with the steel plate 10 to form the closed-section structure.

Then, using the low transformation-temperature welding material selected as the weld metal in the first step, the edges 21, 21 of the stiffener 20 and the steel plate 10 are joined together by arc welding. Specifically, as shown in FIG. 5, the stiffener 20 in the illustrated position is brought to a state indicated by the imaginary lines such that the edges 21, 21 of the stiffener 20 are in contact with the lower surface 12 of the steel plate 10. Then, with the stiffener 20 held in this state, a welding rod 32 is inserted into each of the single bevel grooves 22, 22 and is passed once (single pass welding) in such a manner that the weld metal and portions of the steel plate 10 and the edge 21 close to the single bevel groove 22 are melted by arc discharge, whereby the weld metal is deposited in each single bevel groove 22 to form the weld metal deposit 30 (third step).

The arc welding conditions are set on the basis of the data acquired so as to obtain a fixed dilution ratio of the weld metal through control of the penetration rate, with respect to the specifications of the steel plate 10 and stiffener 20. Preferably, the welding current is set to 200 to 300 A, the voltage to 30 to 35 V, the welding speed to 30 to 40 cm/minute, and the torch angle to 40 to 50 degrees. More desirably, the welding current is set to 280 A, the voltage to 32 V, the welding speed to 35 cm/minute, and the torch angle to 45 degrees.

The following explains the operation and advantages of the steel deck of the present invention, produced in the manner described above.

The weld metal deposit 30 formed by filling the weld metal in each of the single bevel grooves 22, 22 by arc welding thermally shrinks as it is cooled, as shown in FIG. 8. As the weld metal deposit 30 shrinks due to cooling, the phase thereof changes from the γ phase to the α phase, so that the weld metal deposit 30 pulls the steel plate 10 and the edge 21 of the stiffener 20 toward each other. As a result, tensile residual stress remains in the steel plate 10 and the stiffener 20 as welding residual stress.

With such welding residual stress remaining in the steel plate 10 and the stiffener 20, if the steel deck 3 is repeatedly applied with bending load as vehicles run on the steel deck 3, for example, the steel plate 10 is liable to crack mostly from the non-penetrated region.

In the case of the steel deck 3 of the present invention, by contrast, the component composition and linear expansion of the weld metal are adjusted as stated above by using a low transformation-temperature welding material as the weld metal. Accordingly, as seen from FIG. 8 depicting the elongation of the weld metal (solid line) in comparison with that of an ordinary weld metal (broken line), the weld metal deposit 30 once shrunk undergoes martensitic transformation as the temperature thereof further lowers and enters the predetermined low temperature range, causing such substantial transformation expansion as to cancel out the thermal shrinkage. Since the weld metal deposit 30 substantially expands in the predetermined low temperature range, the elongation of the weld metal deposit 30 once shrunk returns to an elongation value equivalent to that at around 400°C, for example, whereby the welding residual stress of the steel plate 10 and the stiffener 20 can be satisfactorily removed.

Thus, even in the case where the weld metal deposit 30 is formed by single pass (single layer) welding, instead of multi-pass (multilayer) welding, the weld metal exhibits a significantly large elongation at 30°C (room temperature), compared with ordinary weld metals, with the result that substantially no welding residual stress remains in the steel plate 10 as well as in the stiffener 20. It is therefore possible to minimize the frequency of occurrence of cracking at the non-penetrated region of the steel plate 10 while at the same time greatly reducing the man-hour of the welding work and also improving the efficiency of the welding operation.

In the steel deck 3 of the embodiment, therefore, the residual stress of the steel plate 10 and the stiffener 20 can be reduced, thereby avoiding lowering in the assembling accuracy, tensile strength and compressive strength. Also, cracking can be suppressed to thereby enhance the fatigue strength of the steel deck.

Even if melt-through occurs while a low transformation-temperature welding material is used as the weld metal, cracking can be suppressed because a non-penetrated region does not exist. Consequently, the residual stress of the steel plate 10 and the stiffener 20 can be reduced while at the same time the fatigue strength is improved, whereby deterioration in the weld quality can be minimized. It is therefore possible to carry out the single pass welding without taking care not to cause melt-through.

Particularly, in the above embodiment, a shaped steel with a U-shaped cross section, which is easily available, is used as the stiffener 20. Thus, by using a readily available shaped steel, it is possible to enhance the fatigue strength while at the same time ensuring sufficiently high rigidity.

Further, in the above embodiment, a high fatigue-strength steel plate is used as the steel plate 10. Accordingly, even if the steel plate 10 begins to crack from the non-penetrated region, propagation of such a crack can be satisfactorily restrained because the fatigue crack propagation speed is slow, making it possible to further enhance the fatigue strength and also to reliably prevent fatigue breakdown.

In addition, in cases where a crack piercing through the steel plate or through the weld bead has been formed or is expected to be formed in the welded joint of the embodiment, the steel deck 3 can be repaired on the site of the bridge to recover or increase the fatigue strength, and it is unnecessary to remove the pavement from the bridge to repair or replace the steel deck 3, whereby the maintenance cost can be drastically cut down. During the repair, moreover, the dilution ratio of the weld metal can be controlled to the fixed ratio, making it possible to recover or enhance the fatigue strength with good reproducibility.

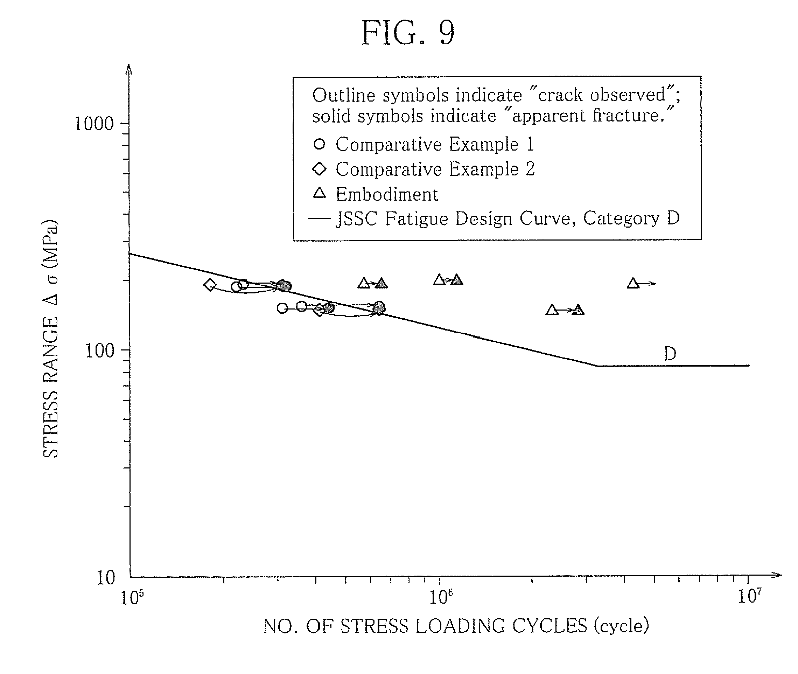

For evaluation purposes, a welded joint of Comparative Example 1 using an ordinary welding material (Type 1) as the weld metal for joining the steel plate 10 and the stiffener 20 together by arc welding, a welded joint of Comparative Example 2 using another ordinary welding material (Type 2) as the weld metal, and the welded joint of the steel deck 3 according to the embodiment, in which the low transformation-temperature welding material having the aforementioned composition was used as the weld metal, were individual subjected to a fatigue test using cyclic stress loading. The fatigue strengths of the individual welded joints, measured by the fatigue testing, are plotted in the S-N diagram of FIG. 9 along with the JSSC fatigue design curve D.

The horizontal axis of the S-N diagram indicates the number of times the stress was cyclically applied in the fatigue testing, and the vertical axis indicates a stress range Δσ showing the difference between maximum and minimum stresses applied to the individual specimens during the fatigue testing.

As illustrated in the S-N diagram of FIG. 9, the welded joints of Comparative Examples 1, 2 showed cracking (O, ◊) and apparent fracture (●, ◆) at levels below the JSSC fatigue design curve, category D. In the case of the welded joint of the steel deck 3 according to the embodiment, on the other hand, cracking (Δ) and apparent fracture (▲) both occurred at levels above the JSSC fatigue design curve, category D. Thus, the welded joint of the steel deck 3 of the embodiment proved to have higher fatigue strength than the welded joints of Comparative Examples 1 and 2.

In the foregoing embodiment, a shaped steel with a U-shaped cross section is used as the stiffener 20 for the steel deck 3, in order to constitute the closed-section structure in cooperation with the steel plate 10. Alternatively, a shaped steel with a V-shaped cross section or an I-section steel may be used as the stiffener 20 for the steel deck 3.

Also, in the above embodiment, a high fatigue-strength steel plate is used as the steel plate 10, but satisfactory effects can also be achieved with an ordinary steel used as the steel plate 10.

## Claims

1. A welded joint comprising a first welding member and a second welding member joined to a surface of the first welding member by welding, in which a single bevel groove is formed at an edge of the second welding member brought into contact with the first welding member, and a weld metal is deposited in the single bevel groove by arc welding to join the first and second welding members together,
**characterized in that** the weld metal is a low transformation-temperature welding material whose martensitic transformation takes place in a predetermined low temperature range, and a groove angle of the single bevel groove of the second welding member and welding conditions are set on the basis of data acquired so as to obtain a fixed dilution ratio of the weld metal through control of penetration rate.

2. The welded joint according to claim 1, wherein, in accordance with the data acquired so as to obtain a fixed dilution ratio of the weld metal through control of the penetration rate, the groove angle of the single bevel groove of the second welding member is set to 40 to 50 degrees.

3. The welded joint according to claim 1, wherein the low transformation-temperature welding material is an iron alloy containing at least components: 0.20 mass % or less of carbon, 3.0 to 13.0 mass % of chromium, and 3.0 to 12.0 mass % of nickel; and the iron alloy has a composition adjusted such that an amount of linear expansion per millimeter in a temperature range from a martensitic transformation start temperature to room temperature is equal to or greater than -3 × 10⁻³ mm.

4. The welded joint according to claim 1, wherein the first welding member is a high fatigue-strength steel plate which has a high fatigue strength and of which a fatigue crack propagation speed in a predetermined stress intensity factor range falls within a predetermined low speed range.

5. A steel deck comprising:
a steel plate having a paving surface on which a pavement of a bridge is placed; and
at least one stiffener joined by welding to a lower surface of the steel plate opposite the paving surface,
wherein a single bevel groove is formed at an edge of the stiffener brought into contact with the steel plate, and a weld metal is deposited in the single bevel groove by arc welding to form the steel deck,
**characterized in that** the weld metal is a low transformation-temperature welding material whose martensitic transformation takes place in a predetermined low temperature range, and a groove angle of the single bevel groove of the stiffener and welding conditions are set on the basis of data acquired so as to obtain a fixed dilution ratio of the weld metal through control of penetration rate.

6. The steel deck according to claim 5, wherein, in accordance with the data acquired so as to obtain a fixed dilution ratio of the weld metal through control of the penetration rate, the groove angle of the single bevel groove of the stiffener is set to 40 to 50 degrees.

7. The steel deck according to claim 5, wherein the stiffener forms a closed-section structure in cooperation with the lower surface of the steel plate, and single bevel grooves are formed at respective edges of the stiffener brought into contact with the steel plate to form the closed-section structure such that the single bevel grooves open outward in respective opposite directions.

8. The steel deck according to claim 7, wherein the stiffener is a shaped steel with a U-shaped cross section.

9. The steel deck according to claim 5, wherein the low transformation-temperature welding material is an iron alloy containing at least components: 0.20 mass % or less of carbon, 3.0 to 13.0 mass % of chromium, and 3.0 to 12.0 mass % of nickel; and the iron alloy has a composition adjusted such that an amount of linear expansion per millimeter in a temperature range from a martensitic transformation start temperature to room temperature is equal to or greater than -3 × 10⁻³ mm.

10. The steel deck according to claim 5, wherein the steel plate is a high fatigue-strength steel plate which has a high fatigue strength and of which a fatigue crack propagation speed in a predetermined stress intensity factor range falls within a predetermined low speed range.

11. A process for producing the steel deck of claim 5 or 6, comprising:
a first step of selecting, as the weld metal, a low transformation-temperature welding material whose martensitic transformation takes place in the predetermined low temperature range;
a second step of forming a single bevel groove at the edge of the stiffener brought into contact with the steel plate; and
a third step of performing welding under the welding conditions to deposit the weld metal in the single bevel groove.

12. The process according to claim 11, wherein, in the first step, an iron alloy is selected as the low transformation-temperature welding material, the iron alloy containing at least components: 0.20 mass % or less of carbon, 3.0 to 13.0 mass % of chromium, and 3.0 to 12.0 mass % of nickel; and having a composition adjusted such that an amount of linear expansion per millimeter in a temperature range from a martensitic transformation start temperature to room temperature is equal to or greater than -3 × 10⁻³ mm.

13. The process according to claim 11, wherein the first step further includes selecting, as the steel plate, a high fatigue-strength steel plate which has a high fatigue strength and of which a fatigue crack propagation speed in a predetermined stress intensity factor range falls within a predetermined low speed range.

14. The process according to claim 11, wherein, in the third step, the weld metal is deposited in the single bevel groove by single pass welding.

15. A process for producing the steel deck of claim 7 or 8, comprising:
a first step of selecting, as the weld metal, a low transformation-temperature welding material whose martensitic transformation takes place in the predetermined low temperature range;
a second step of forming single bevel grooves at the respective edges of the stiffener brought into contact with the steel plate to form the closed-section structure such that the single bevel grooves open outward in respective opposite directions; and
a third step of performing welding under the welding conditions to deposit the weld metal in the individual single bevel grooves.

16. The process according to claim 15, wherein, in the first step, an iron alloy is selected as the low transformation-temperature welding material, the iron alloy containing at least components: 0.20 mass % or less of carbon, 3.0 to 13.0 mass % of chromium, and 3.0 to 12.0 mass % of nickel; and having a composition adjusted such that an amount of linear expansion per millimeter in a temperature range from a martensitic transformation start temperature to room temperature is equal to or greater than -3 × 10⁻³ mm.

17. The process according to claim 15, wherein the first step further includes selecting, as the steel plate, a high fatigue-strength steel plate which has a high fatigue strength and of which a fatigue crack propagation speed in a predetermined stress intensity factor range falls within a predetermined low speed range.

18. The process according to claim 15, wherein, in the third step, the weld metal is deposited in each of the single bevel grooves by single pass welding.
